# EUROPÄISCHE PATENTANMELDUNG

(11) **EP 0 628 395 A1**
(43) Veröffentlichungstag der Anmeldung: **14.12.1994**
(21) Anmeldenummer: 94108506.0
(22) Anmeldetag: 03.06.1994
(51) Int. Cl.: B29C 45/17

(54) **Verfahren zum Spritzgiessen von Formteilen aus thermoplastischem Kunststoffmaterial sowie Formwerkzeug zur Durchführung desselben**

(30) Priorität: 11.06.1993 DE 4319381
(71) Anmelder: Battenfeld GmbH, D-58540 Meinerzhagen (DE)
(72) Erfinder: Eckardt, Helmut, Dipl.-Ing., D-58540 Meinerzhagen (DE); Ehritt, Jürgen, Dipl.-Ing., D-57271 Hilchenbach (DE)
(74) Vertreter: Müller, Gerd, Dipl.-Ing.

(57) **Zusammenfassung**

Zum Spritzgießen von Formteilen 10 aus thermoplastischem Kunststoffmaterial, die mit ihren Wandungen 13, 14 einen Hohlraum 15 einschließen, wird ein Verfahren vorgeschlagen, bei welchem ein in seinem Volumen vorbegrenztes Formnest 23 eines Formwerkzeuges 20 zunächst mit der Kunststoffschmelze 31 vollgespritzt und dann in seinem Volumen vergrößert sowie mit einem fluidischen Druckmedium beaufschlagt wird, damit die Kunststoffschmelze 31 sich unter Hohlraumbildung längs der Wandungen des vergrößerten Formnestvolumens verteilt und an diese anlegt.

Damit die erwünschten bzw. benötigten Hohlräume 15 in den Formteilen 10 exakt reproduzierbar ausgeformt werden können, wird in die das vorbegrenzte Formnest-Volumen vollständig ausfüllende Kunststoffschmelze 31 - ggfs. nach Ablauf einer an den Kunststoffschmelze-Spritzvorgang anschließenden Pausen- oder Ruhezeit - das fluidische Druckmedium eingespritzt und erst während bzw. mit dessen Einspritzung und/oder abhängig von dieser Einspritzung des fluidischen Druckmediums in die Kunststoffschmelze 31 wird das Volumen des Formnestes 23 gezielt vergrößert wird.

## Beschreibung

Die Erfindung betrifft ein Verfahren zum Spritzgießen von Formteilen aus thermoplastischem Kunststoffmaterial, die mit Ihren Wandungen einen Hohlraum einschließen, bei welchem ein in seinem Volumen vorbegrenztes Formnest eines Formwerkzeuges zunächst mit der Kunststoffschmelze vollgespritzt und dann in seinem Volumen vergrößert sowie mit einem fluidischen Druckmedium (Gas) beaufschlagt wird, damit die Kunststoffschmelze sich unter Hohlraumbildung längs der Wandungen des vergrößerten Formnestvolumens verteilt und an diese anlegt.

Die Erfindung befaßt sich aber auch mit einem Formwerkzeug zur Durchführung dieses Verfahrens, bei dem das fluidische Druckmedium nach dem Einspritzen der Kunststoffschmelze in das Formnest einführbar ist, und bei dem das Formnest ein Teilvolumen hat, das nur zeitweilig zur Aufnahme von Kunststoffschmelze freigebbar ist.

Ein Verfahren der gattungsgemäßen Art und ein Formwerkzeug zu dessen Durchführung sind bereits bekannt, wie das beispielsweise aus der US-A-5 028 377 hervorgeht.

Nach diesem Stand der Technik findet zunächst eine vollständige Füllung des Formnestes mit der Kunststoffschmelze statt. Danach wird dann eine Volumensvergrößerung des vorbegrenzten Formnestes herbeigeführt und im Anschluß hieran wird die Kunststoffschmelze mit fluidischem Druckmedium, insbesondere einem Gas, beaufschlagt, damit sie sich unter Hohlraumbildung in ihrem Inneren längs der Wandungen des vergrößerten Formnestvolumens verteilt und an diese unter exakter Ausbildung der Formteilkontur anlegt.

Diese Art der Herstellung von Spritzguß-Formteilen aus thermoplastischen Kunststoffmaterial kommt immer dann zum Einsatz, wenn allein die Volumenkontraktion der in ein Formnest eingespritzten Kunststoffschmelze nicht ausreicht, um durch Einspritzen des fluidischen Druckmediums (Gas) innerhalb des jeweiligen Formteils den gewünschten oder sogar geforderten Hohlraum ausbilden zu können.

Genutzt wird diese Fertigungsart zur Herstellung von Spritzguß-Formteilen aus Kunststoffmaterial aber auch dann, wenn sichergestellt werden muß, daß das zur Hohlraumbildung eingespritzte fluidische Druckmedium nicht in unerwünschter Weise in Bereiche geringer Wanddicke des Formteils eindringt und daher in einem gewissen Maße eine Abkühlung der Kunststoffschmelze erforderlich ist, bevor das Einspritzen des fluidischen Druckmediums beginnt. Nur die Möglichkeit einer nachträglichen Volumensvergrößerung des Formnestes stellt nämlich in diesem Falle sicher, daß mit der Einspritzung des fluidischen Druckmediums noch eine befriedigende Ausbildung des Hohlraumes im Formteil erreicht werden kann.

In allen Anwendungsfällen der durch die US-A-5 028 377 bekanntgewordenen Verfahrensart stellt sich jedoch ein wesentlicher Nachteil ein. Durch die an das Vollspritzen des in seinem Volumen vorbegrenzten Formnestes mit Kunststoffschmelze anschließende Volumensvergrößerung kommt es in dieser Kunststoffschmelze zwangsläufig zu einem Druckabfall, bevor die Einwirkung des fluidischen Druckmediums hierauf beginnt. Dieser Druckabfall erweist sich aber in der Praxis als höchst unerwünscht, weil er einer reproduzierbaren Ausformung der Hohlräume in den jeweiligen Formteilen hinderlich ist bzw. entgegenwirkt.

Aufgabe der Erfindung ist es, eine gattungsgemäße Verfahrensart und auch ein Formwerkzeug zu deren Durchführung anzugeben, die bzw. das praktisch ohne wesentlichen technischen Mehraufwand die Fertigung von Formteilen aus thermoplastischem Kunststoffmaterial gewährleistet, in denen sich die erwünschten bzw. benötigten Hohlräume exakt reproduzierbar ausformen lassen.

Gelöst wird die gestellte Aufgabe in verfahrenstechnischer Hinsicht nach der Erfindung dadurch, daß in die das vorbegrenzte Formnest-Volumen vollständig ausfüllende Kunststoffschmelze das fluidische Druckmedium (Gas) eingespritzt wird, und daß erst während bzw. mit der Einspritzung und oder abhängig von der Einspritzung des fluidischen Druckmediums in die Kunststoffschmelze das Volumen des Formnestes gezielt vergrößert wird.

Als besonders zweckentsprechend hat sich erwiesen, wenn erfindungsgemäß das fluidische Druckmedium (Gas) erst nach Ablauf einer an den Kunststoffschmelze-Spritzvorgang anschließenden Pausen- oder Ruhezeit in die das vorbegrenzte Fromnest-Volumen vollständig ausfüllende Kunststoffschmelze eingespritzt wird.

Vorteilhaft ist dabei nach der Erfindung, daß während der Pausen- oder Ruhezeit, die zwischen dem Ende des Einspritzens der Kunststoffschmelze und dem Beginn der Einspritzung des fluidischen Druckmediums liegt, auf das begrenzte Volumen des Formnestes bzw. auf die darin befindliche Kunststoffschmelze nicht nur der vom Spritzaggregat herrührende Schmelzedruckerhaltenbleibt, sondern sogar ein Nachdruck ausgeübt werden kann, und daß auch das fluidische Medium schon auf das begrenzte Volumen des Formnestes bzw. der darin befindlichen Kunststoffschmelze angesetzt werden kann, bevor der vom Spritzaggregat herrührende Arbeitsdruck wegfällt.

Die gezielte Vergrößerung des Formnest-Volumens im Formwerkzeug muß aber nicht immer - wie vorstehend erwähnt - erst nach Ablauf einer Pausen- oder Ruhezeit erfolgen. Vielmehr kann sie gegebenenfalls auch präzise gesteuert oder geregelt, bspw. druck-, weg- und/oder zeitabhängig stattfinden. Druckabhängige Steuerung oder Regelung ist dabei möglich über die Messung des in bzw. an der Plastifiziereinheit anstehenden Masse- oder Hydraulikdrucks oder aber von der Messung des Schmelzedrucks im Formwerkzeug, wobei im letzteren Falle die Messung an einer Stelle stattfinden sollte, an der die Vergrößerung des Formnest-Volumens einsetzt. Eine wegabhängige Steuerung oder Regelung der Volumenvergrößerung des Formnestes läßt sich in Abhängigkeit von der Schneckenposition in der Plastifiziereinheit bewirken, während für eine zeitabhängige Steuerung oder Regelung der Beginn des Einspritzens der Schmelze in das Formnest herangezogen werden kann. Hierdurch ist es möglich, erst bei einer bestimmten Kompression der Schmelze im Formnest die Volumenvergrößerung zu beginnen.

Eine wichtige verfahrenstechnische Weiterbildung liegt erfindungsgemäß aber auch darin, daß das Druckniveau des fluidischen Mediums während der Volumensvergrößerung des Formnestes kontrolliert und oder geregelt wird und sich so in optimaler Weise auf die jeweiligen Bedürfnisse abstimmen läßt. Das fluidische Medium steht währenddessen praktisch in unbegrenzter Menge zur Verfügung und wird durch die Kontrolle oder Regelung im Normalfall immer auf gleicher Druckhöhe gehalten. Denkbar ist es allerdings auch, ein vorgebbares Druckprofil abzufahren, das bspw. einen an- und absteigenden Druckverlauf einschließt.

Ein gattungsgemäßes Formwerkzeug zur Durchführung des vorstehend angegebenen Verfahrens, bei dem das Formnest ein Teilvolumen hat, welches nur zeitweilig zur Aufnahme von Kunststoffschmelze freigegeben wird, kann erfindungsgemäß einerseits so aufgebaut werden, daß das Teilvolumen im Formnest selbst ausgebildet und in seinen Abmessungen von darin verlagerbaren Füllstücken bestimmt ist.

Andererseits ist es aber bei einem solchen Formwerkzeug auch möglich, daß das Teilvolumen in einem Bereich neben dem eigentlichen Formnest liegt und an dieses über einen wahlweise absperrbaren und freigebbaren Überlauf anschließt.

Im ersteren Falle ist wiederum die Möglichkeit gegeben, daß entweder das Teilvolumen von einem in das Formnest hineinragenden Kernschieber bestimmt wird, oder aber, daß das Teilvolumen in mindestens einem Raumabschnitt des Formnestes liegt, der durch ein seinem Querschnitt angepaßtes, verlagerbares Füllstück freigegeben werden kann. Im zweiten Falle läßt sich hingegen der Überlauf durch ein mechanisches Stellorgan, z. B. einen Schieber, absperren und freigeben.

In jedem Falle ist es nach der Erfindung vorteilhaft, wenn die Füllstücke für das Teilvolumen und/oder die Stellorgane für den Überlauf durch Fremdsteuerung und/oder durch Drucksteuerung und/oder durch Zeitsteuerung betätigbar sind, weil sich hierdurch das Formwerkzeug leicht auf die unterschiedlichsten Bedürfnisse abstimmen läßt.

Die Fremdsteuerung läßt sich über Zylinder auf pneumatischem und/oder hydraulischem Wege, aber auch durch elektrischen Antrieb, wie Hubmagnete, Spindelmotoren oder dergleichen bewirken, und zwar sowohl für die Vorwärts- als auch die Rückwärtsbewegung der Füllstücke bzw. Stellorgane.

Die Bewegungssteuerung der Füllstücke bzw. Stellorgane läßt sich aber auch in Abhängigkeit vom Druck der Kunststoffschmelze und/oder des fluidischen Mediums herbeiführen. Hierbei ist es einerseits möglich, den Druck in der Kunststoffschmelze oder des fluidischen Mediums zur Auslösung der Fremdsteuerung zu nutzen. Andererseits kann aber auch über die Kunststoffschmelze bzw. das fluidische Medium unmittelbar auf die das Teilvolumen im Formnest beeinflussenden Füllstücke eingewirkt werden, wenn diese durch Kraftspeicher, bspw. federbelastet, das vorbegrenzte Formnest-Volumen bestimmen. Bei Erreichen eines bestimmten Massedruckes an dem durch Kraftspeicher belasteten Schieber wird dieser aus der das vorbegrenzte Formnest-Volumen bestimmenden Stellung zurückgedrängt und führt somit selbsttätig zu der jeweils vorgesehenen Vergrößerung des Formnest-Volumens.

Eine selbsttätige Drucksteuerung der zuletzt genannten Art kann kombinatorisch auch mit einer Fremdsteuerung zusammenarbeiten, bspw. in der Weise, daß eine Volumensvergrößerung des Formnestes allein gegen den Kraftspeicher massedruckabhängig und damit selbsttätig stattfindet, während die Rückführung auf das vorbegrenzte Formnest-Volumen durch Fremdsteuerung - pneumatisch, hydraulisch, elektrisch - zumindest unterstützt wird.

Wenn Formwerkzeuge zum Einsatz gelangen, bei denen die Vergrößerung des Formnest-Volumens dadurch bewirkt wird, daß das Teilvolumen in einem Bereich neben dem eigentlichen Formnest liegt und an dieses über einen wahlweise absperrbaren und freigebbaren Überlauf anschließt, dann besteht die vorteilhafte Möglichkeit, diese Nebenkavität selbst als ein zusätzliches Formnest zu nutzen. In diesem zusätzlichen Formnest lassen sich dann nämlich unter Ausnutzung der bei der Herstellung der Haupt-Formteile anfallenden Überschuß-Schmelze gleichzeitig Neben-Formteile fertigen. Diese Möglichkeit ist besonders dann von Vorteil, wenn an die Qualität der Neben-Formteile keine besonders hohen Anforderungen gestellt werden.
Nachfolgend wird die Erfindung anhand von Ausführungsbeispielen ausführlich beschrieben. Es zeigen:
- Figur 1: im Längsschnitt ein topfartig gestaltetes Spritzguß-Formteil aus Kunststoffmaterial mit einem sowohl in seiner Bodenwandung als auch in seiner Mantelwandung eingeschlossenen Hohlraum,
- Figur 2: im Längsschnitt ein zur Herstellung des Spritzguß-Formteils nach Figur 1 geeignetes Spritzgieß-Formwerkzeug, das mit der Angußöffnung seines Formnestes an das Düsenmundstück eines Spritzaggregates angelegt ist, vor Beginn eines Spritzgießvorganges,
- Figur 3: in einem der Figur 2 entsprechenden Schnitt das Spritzgieß-Formwerkzeug nach Durchführung der ersten Phase eines Spritzgießvorgangs für das Formteil,
- Figur 4: das Spritzgieß-Formwerkzeug nach Beendigung der letzten Phase des Spritzgießvorgangs zur Herstellung des Formteils,
- Figur 5: ein Flußdiagramm der Arbeitsschritte des erfindungsgemäßen Spritzgießverfahrens,
- Figur 6: einen Längsschnitt durch eine weitere Ausführungsform bzw. Bauart eines Spritzgieß-Formwerkzeuges nach Durchführung der ersten Phase des Spritzgießvorgangs für das Formteil,
- Figur 7: das Spritzgieß-Formwerkzeug nach Fig. 6 am Ende des Spritzgießvorgangs,
- Figur 8: eine wieder andere Bauart bzw. Ausführungsform eines Spritzgieß-Formwerkzeugs im Längsschnitt und nach Durchführung der ersten Phase des Spritzgießvorgangs für das Formteil,
- Figur 9: das Spritzgieß-Formwerkzeug nach Fig. 8 am Ende des Spritzgießvorgangs zur Herstellung des Formteils, während aus den
- Fig. 10 und 11: jeweils im Längsschnitt zwei weitere Bauarten bzw. Ausführungsformen eines Spritzgieß-Formwerkzeuges im Längsschnitt nach Durchführung der ersten Phase eines Spritzgießvorgangs für das Formteil wiedergeben.

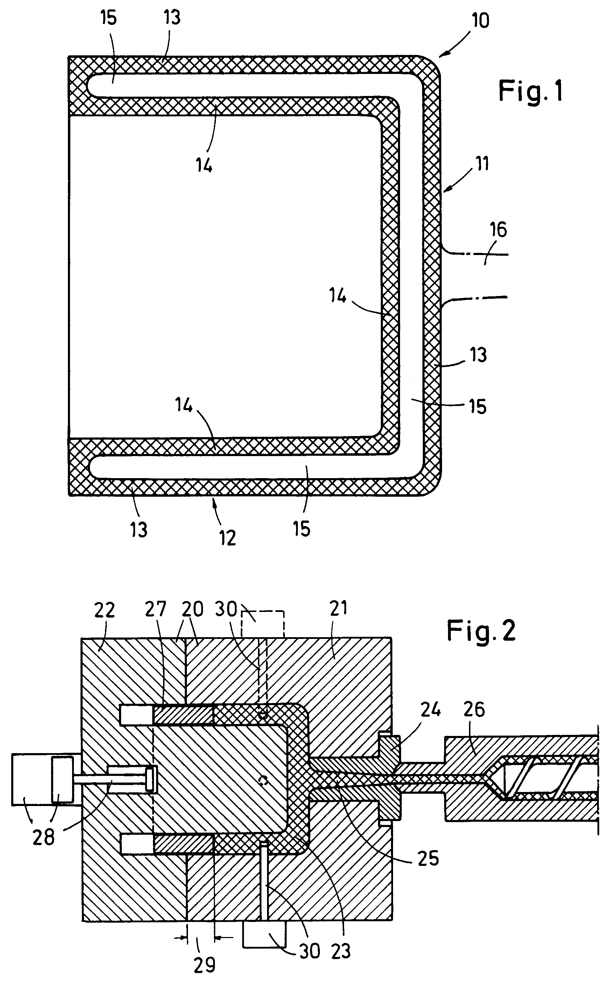

In Fig. 1 der Zeichnung ist ein aus spritzfähigem Kunststoff bestehendes, topfartig gestaltetes Formteil 10 gezeigt, das einen Bodenbereich 11 und einen einstückig an diesen anschließenden Mantelbereich 12 aufweist. Sowohl der Bodenbereich 11 als auch der Mantelbereich 12 des Formteils schließt dabei zwischen einer äußeren Wandung 13 und einer inneren Wandung 14 einen Hohlraum 15 ein, wie das deutlich aus Fig. 1 der Zeichnung entnommen werden kann.

Da das Formteil 10 insgesamt durch Spritzgießen aus thermoplastischem Kunststoffmaterial in einem Spritzgieß-Formwerkzeug hergestellt wird, ist in Fig. 1 der Zeichnung auch noch das Angußstück 16 durch strichpunktierte Linien angedeutet, welches beim Spritzgießen zwangsläufig entsteht und nach dem Auswerfen desselben aus dem Spritzgieß-Formwerkzeug abgetrennt wird.

In den Fig. 2 bis 4 der Zeichnung ist ein Spritzgieß-Formwerkzeug 20 zur Herstellung des Formteils 10 nach Fig. 1 in einer bevorzugten Ausführungsform und Bauart dargestellt. Es hat zwei Formhälften 21 und 22, die zur Eingrenzung eines Formnestes 23 gegeneinandergefahren werden und dabei auch zumindest teilweise ineinandergreifen. Zum Öffnen des Formnestes 23 werden hingegen die beiden Formhälften 21 und 22 auseinandergefahren.

In den Fig. 2 bis 4 ist das Spritzgieß-Formwerkzeug 20 jeweils in seinem Schließzustand gezeigt, bei welchem die beiden Formhälften 21 und 22 aneinanderliegen und ineinandergreifen. Die Formhälfte 21 ist über eine Angußbuchse 24 mit einem Angußkanal 25 an das Düsenmundstück eines Spritzaggregates bzw. Extruders 26 angelegt.

Die zweite Formhälfte 22 des Spritzgieß-Formwerkzeuges 20 ist mit einem sogenannten Kernschieber 27 versehen, welcher zumindest bereichsweise in das Formnest 23 vorschiebbar und auch wieder aus diesem zurückziehbar ist. Hierzu kann ein Stellantrieb 28 benutzt werden, der an der Formhälfte 28 sitzt und beim gezeigten Ausführungsbeispiel von einer Kolben-Zylinder-Einheit gebildet wird, die hydraulisch oder pneumatisch betätigt werden kann. Als Stellantrieb 28 kann aber ebensogut auch ein Spindelmotor oder ein Elektromagnet in Gebrauch genommen werden, der am Kernschieber 27 angreift.

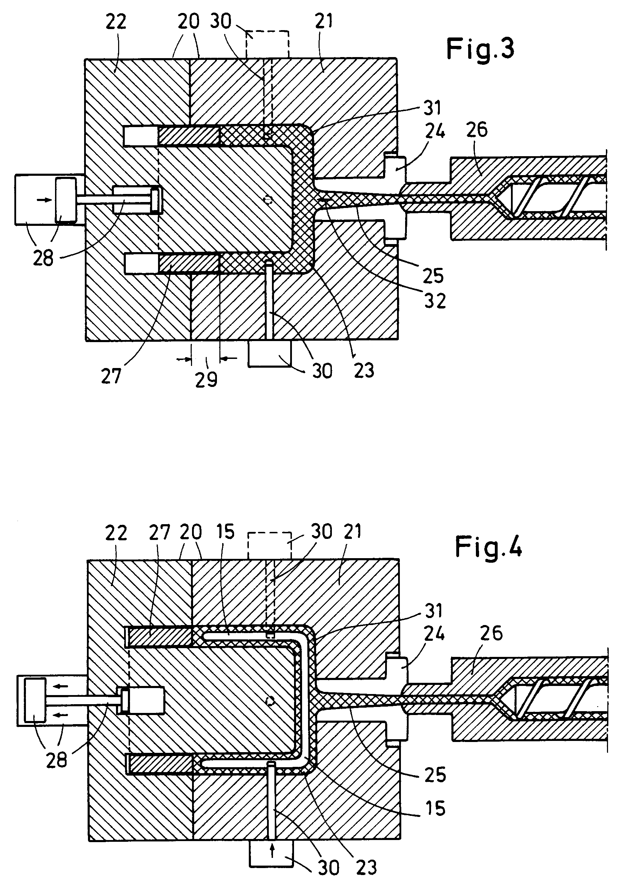

Wie die Fig. 2 und 3 erkennen lassen, ist der Kernschieber 27 mit Hilfe des Stellantriebs 28 beim Beginn jedes Spritzgießvorgangs um ein vorgegebenes Maß 29 in das Formnest 23 eingefahren. Dieses wird dadurch auf ein Volumen vorbegrenzt (Fig. 2), welches kleiner bemessen ist als das Gesamtvolumen des hierin durch Spritzgießen herzustellenden Formteils 10.

Während durch den Angußkanal 25 der Angußbuchse 24 aus dem Spritzaggregat bzw. Extruder 26 thermoplastische Kunststoffschmelze in das Formnest 23 eingespeist werden kann, sind dem Spritzgieß-Formwerkzeug 20, bspw. ebenfalls an seiner Formhälfte 21, noch mindestens eine, vorzugsweise jedoch mehrere Einspritzeinheiten 30 zugeordnet, über die in das Formnest 23 - zusätzlich zur thermoplastischen Kunststoffschmelze 31 - noch ein fluidisches Druckmedium, bspw. Flüssigkeit oder Gas, eingespeist werden kann.

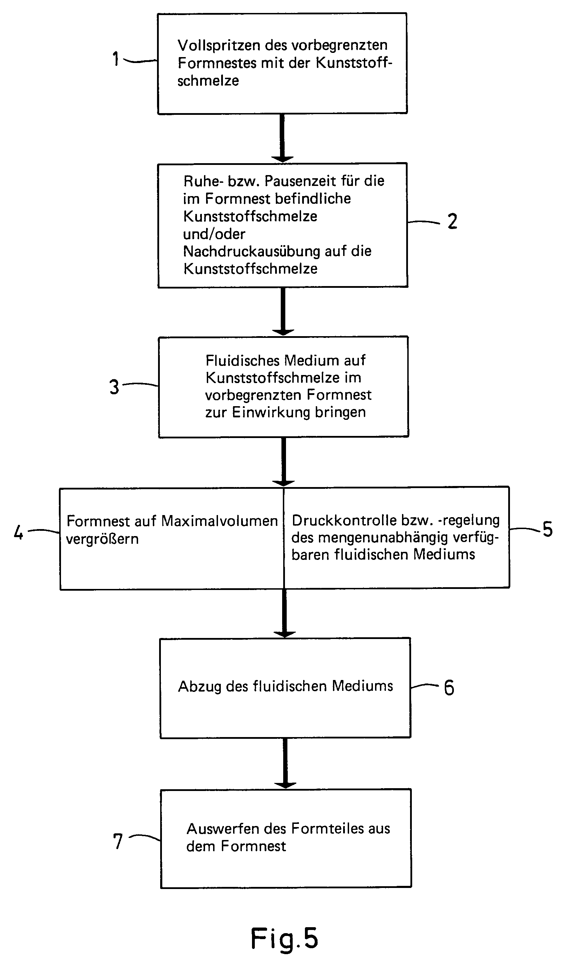

Die Fig. 5 der Zeichnung zeigt in einem Flußdiagramm die Arbeitsschritte eines Spritzgießverfahrens, mit dessen Hilfe in einem Spritzgieß-Formwerkzeug 20 nach den Fig. 2 bis 4 das Formteil 10 nach Fig. 1 hergestellt werden kann.

Zu Beginn jedes einzelnen Spritzgießvorgangs bzw. -zyklus befindet sich das Spritzgieß-Formwerkzeug 20 in dem aus Fig. 2 der Zeichnung ersichtlichen Zustand. Das Formnest 23 ist durch den mittels des Stellantriebs 28 um das vorgegebene Maß 29 vorgeschobenen Kernschieber 27 in seinem Volumen vorbegrenzt. Dieses vorbegrenzte Volumen des Formnestes 23 wird sodann gemäß Fig. 3 mit der thermoplastischen Kunststoffschmelze 31 vollgespritzt bzw. gefüllt, wie das in Fig. 5 schematisch durch den Block 1 kenntlich gemacht ist. An das Füllen bzw. Vollspritzen des Formnestes 23 mit Kunststoffschmelze 31 kann sich eine Ruhe- bzw. Pausenzeit anschließen, wie sie in Fig. 5 durch den strichpunktiert gezeichneten Rahmen 2 angedeutet ist. Während dieser Ruhe- bzw. Pausenzeit 2 läßt sich auf die im Formnest 23 befindliche Kunststoffschmelze 31, bspw. vom Spritzaggregat bzw. Extruder 26 aus ein sogenannter Nachdruck ausüben, der in Fig. 3 durch den Richtungspfeil kenntlich gemacht ist. Während der Ruhe- bzw. Pausezeit 2 ist es also nicht nur möglich, den vom Spritzaggregat bzw. Extruder 26 herrührenden Schmelzedruck in der im begrenzten Volumen des Formnestes 23 enthaltenen Kunststoffschmelze aufrechtzuerhalten, sondern diese auch noch einem den üblichen Schmelzedruck übersteigenden Nachdruck auszusetzen. Dieser führt dazu, daß die den Wandungen des Formnestes 23 benachbarten Schmelzeschichten dicht an die Formwandungen angelegt und schon dementsprechend exakt ausgeformt werden, obwohl die von den Formwandungen entfernten Zonen der Kunststoffschmelze noch schmelzflüssig sind.

Nachdem gegebenenfalls die Ruhe- bzw. Pausenzeit 2 abgelaufen ist, wird durch die Einspritzeinheiten 30 in die im volumensbegrenzten Formnest 23 befindliche, thermoplastische Kunststoffschmelze 31 fluidisches Druckmedium zur Einwirkung gebracht, welches zumindest ein Druckniveau hat, das dem nach Beendigung des Einspritzvorgangs 1 im Formnest 23 anstehenden Schmelzedruck entspricht.

Erst wenn das fluidische Druckmedium gemäß Block 3 der Fig. 5 das Formnest 23 des Spritzgieß-Formwerkzeuges 20 angesetzt worden ist, wird dann das zunächst vorbegrenzte Volumen des Formnestes 23 durch Zurückfahren des Kernschiebers 27 mittels des Stellantriebs 28 gezielt vergrößert (vgl. Fig. 3 und 4 der Zeichnung), wie das durch den Block 4 der Fig. 5 angedeutet ist. Während bzw. mit der gezielten Volumensvergrößerung des Formnestes 23 findet dann eine Einspritzung des fluidischen Druckmediums in einer solchen Menge statt, daß ein Formteil 10 entsteht, in welchem ein Hohlraum 15 ausgebildet wird, dessen Volumen zumindest demjenigen Volumen entspricht, um welches das Formnest 23 durch Zurückfahren des Kernschiebers 27 über das vorgegebene Maß 29 vergrößert worden ist.

Während der durch den Rahmen 4 der Fig. 5 angedeuteten Vergrößerung des Formnestes 23 von seinem vorbegrenzten Volumen (vgl. Fig. 2 und 3) auf das Maximalvolumen (vgl. Fig. 4) ist es wichtig, daß das Druckniveau des über die Einspritzeinheiten 30 zugeführten fluidischen Mediums (Flüssigkeit oder Gas) ständig einer Druckkontrolle bzw. -regelung unterworfen bleibt, wie das in Fig. 5 durch den Block 5 kenntlich gemacht ist. Ferner ist es dabei besonders wichtig, daß das fluidische Druckmedium nicht mit einer volumensmäßig begrenzten Menge in das Formnest 23 hinein wirkt, sondern praktisch ohne Volumensbegrenzung zur Verfügung steht, so daß praktisch immer mit reiner Druckkontrolle bzw. - regelung des fluidischen Druckmediums gearbeitet werden kann.

Nachdem das Formteil 10 innerhalb des spritzgieß-Formwerkzeuges 20 gemäß Fig. 4 genügend ausgehärtet ist, wird das fluidische Druckmedium aus dem im Formteil 10 ausgebildeten Hohlraum 15, bspw. über die Einspritzeinheiten 30 abgezogen, wie das in Fig. 5 durch den Block 6 kenntlich gemacht ist. Daraufhin kann dann das Spritzgieß-Formwerkzeug durch Auseinanderfahren seiner beiden Formhälften 21 und 22 geöffnet und endlich das Formteil 10 aus dem Formnest 23 ausgeworfen werden, wie das der Block 7 in Fig. 5 kenntlich macht.

Vorstehend ist anhand der Fig. 1 bis 5 das Spritzgießen von Formteilen 10 aus thermoplastischem Kunststoffmaterial erläutert, die mit ihren Wandungen 13 und 14 einen Hohlraum 15 einschließen. Bei diesem Herstellungsverfahren wird dabei ein zunächst in seinem Volumen gemäß den Fig. 2 und 3 vorbegrenztes Formnest 23 des Formwerkzeuges 20 mit der Kunststoffschmelze 31 vollgespritzt (Fig. 3) und dann in seinem Volumen vergrößert (Fig. 4) sowie zusätzlich mit einem fluidischen Druckmedium (Gas oder Flüssigkeit) beaufschlagt, damit die Kunststoffschmelze 31 sich unter Bildung eines Hohlraumes 15 längs der Wandungen des vergrößerten Formnestvolumens verteilt und an diese anlegt.

Von wesentlicher Bedeutung ist dabei,
- daß in die das vorbegrenzte Formnest-Volumen vollständig ausfüllende Kunststoffschmelze 31, gegebenenfalls nach Ablauf einer an den Kunststoffschmelze-Spritzvorgang anschließenden Pausen- oder Ruhezeit, das fluidische Druckmedium (Gas oder Flüssigkeit) eingespritzt wird,
- und daß erst während bzw. mit der Einspritzung und/oder abhängig von der Einspritzung dieses fluidischen Druckmediums in die Kunststoffschmelze gezielt die Volumensvergrößerung des Formnestes bewirkt wird bzw. stattfindet.

Da bei dem in den Fig. 2 bis 4 der Zeichnung dargestellten Ausführungsbeispiel eines Spritzgieß-Formwerkzeuges 20 die Bewegung des der Volumensvergrößerung des Formnestes 23 dienenden Kernschiebers 27 durch einen Stellantrieb 28 stattfindet, sind verschiedene Betriebsweisen des Spritzgieß-Formwerkzeuges 20 möglich. So kann der Stellantrieb 28 für den Kernschieber 27 durch Fremdsteuerung ausgelöst werden, die jeweils erst nach einem Befüllen des Formnestes 23 mit thermoplastischer Kunststoffschmelze und/oder nach Einwirkungsbeginn des fluidischen Druckmediums auf diese Kunststoffschmelze 31 ausgelöst wird. Auslöser für den Stellantrieb 28 kann aber auch ein bestimmter Schmelzedruck im Formnest 23 oder aber auch das Ansetzen des fluidischen Druckmediums auf die im Formnest 23 enthaltene Kunststoffschmelze 31 sein. Neben einer fremdgesteuerten Komponente und einer druckgesteuerten Komponente kann aber in das Spritzgieß-Formwerkzeug 20 auch eine zeitgesteuerte Komponente für die Volumensvergrößerung des Formnestes 23 integriert werden. In jedem Falle muß jedoch sichergestellt sein, daß eine Volumensvergrößerung des mit thermoplastischer Kunststoffschmelze 31 vollgespritzten, volumensbegrenzten Formnestes 23 immer erst dann stattfinden kann, wenn die Einwirkung des fluidischen Druckmediums auf diese Kunststoffschmelze 31 bereits eingesetzt hat.

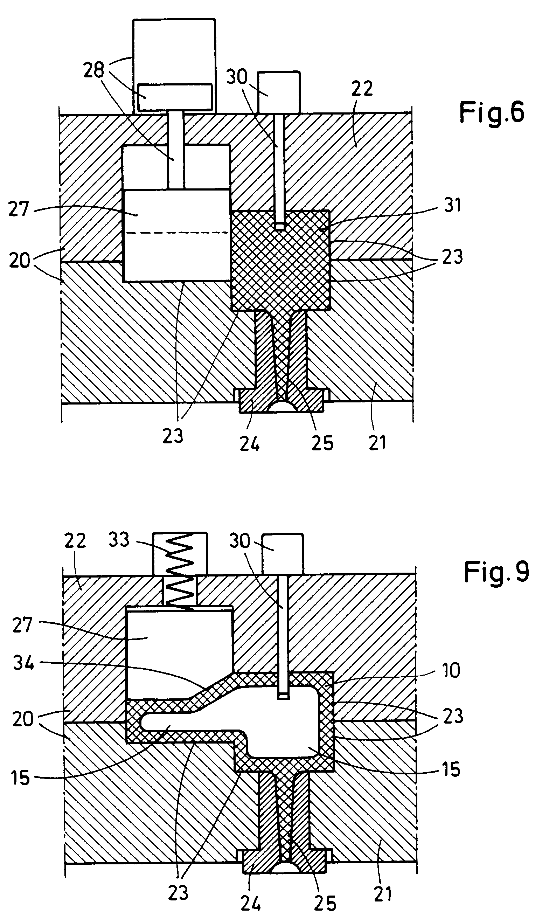

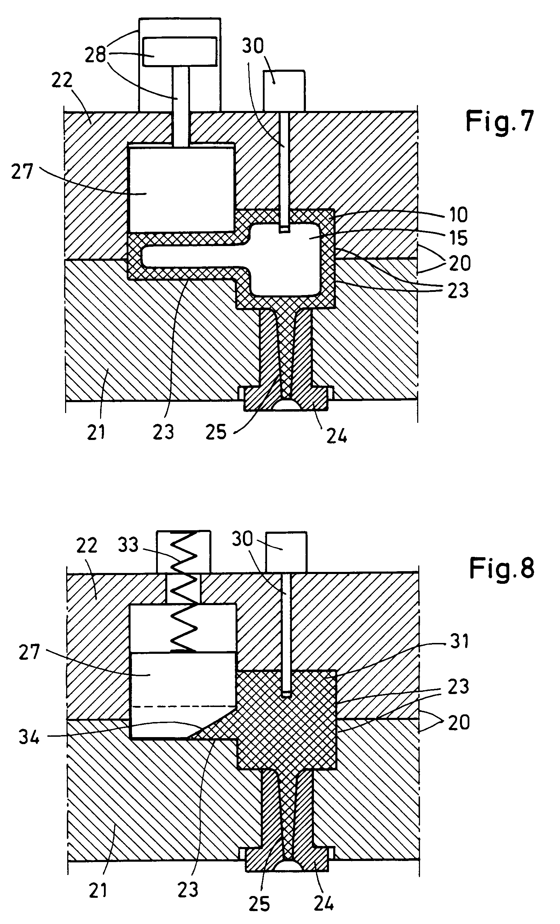

Während bei dem Spritzgieß-Formwerkzeug nach den Fig. 2 bis 4 mit dem Formnest 23 ein Kernschieber 27 zusammenwirkt, der lediglich innerhalb des eigentlichen Formnestes 23 zurückgezogen werden muß, um darin zusätzliche Bereiche für das auszubildende Formteil 10 freizugeben, zeigen die Fig. 6 und 7 einen Aufbau für ein Spritzgießformwerkzeug 20 mit einem Formnest 23, das insgesamt der Außenkontur des darin herzustellenden Formteils 10 entspricht, wobei aber ein Teil dieser Außenkontur zeitweilig durch einen seitlich ein- und ausfahrbaren Kernschieber 27 vollständig ausgefüllt wird. Auch hier wird der Kernschieber 27 durch einen fremdsteuerbaren Stellantrieb 28 bewegt.

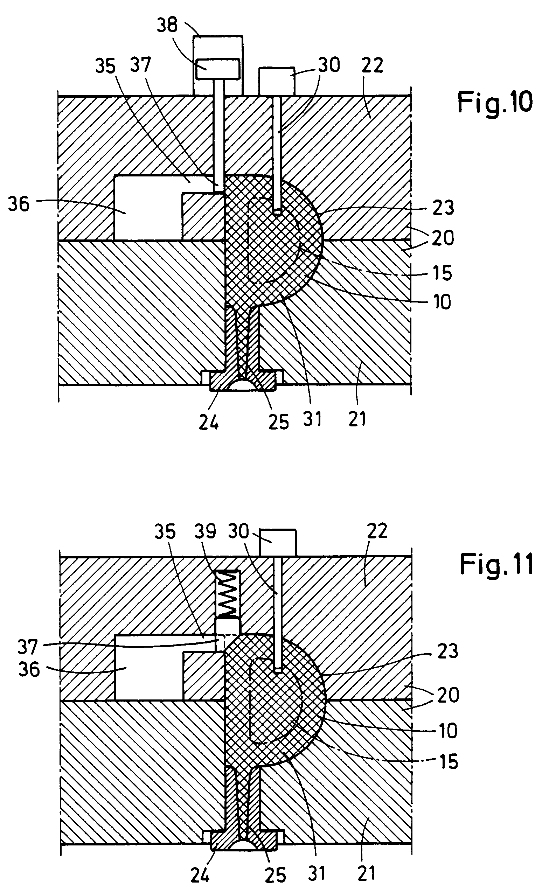

Den Fig. 8 und 9 der Zeichnung ist ein Spritzgieß-Formwerkzeug 20 zu entnehmen, das von seinem Grundaufbau her mit dem Spritzgieß-Formwerkzeug nach den Fig. 6 und 7 übereinstimmt.

Dort ist jedoch der Stellantrieb 28 für den Kernschieber 27 durch eine Belastungsfeder 33 ersetzt, welche den Kernschieber 27 in seiner Absperrstellung gemäß Fig. 8 zu halten sucht. Die Kraft der Belastungsfeder 33 ist dabei so eingestellt, daß sie den Kernschieber 27 in seiner Absperrstellung gemäß fig. 8 hält, bis ein bestimmter Innendruck des Formnestes 23 überschritten wird.

Diese Drucküberschreitung kann dabei von dem über die Einspritzeinheiten 30 in das Formnest 23 und die darin befindliche thermoplastische Kunststoffschmelze 31 eingespeisten fluidischen Druckmedium herrühren. Durch Einwirkung der Druckerhöhung auf die Schrägfläche 34 des Kernschiebers 27 wird eine Kraftkomponente erzeugt, die den Kernschieber 27 gegen die Wirkung der Belastungsfeder 33 anhebt und ihn damit aus dem bisher abgesperrten Bereich des Formnestes 23 verdrängt, wie das die Fig. 9 verdeutlicht. Innerhalb des gesamten Formnestes 23 wird dadurch die thermoplastische Kunststoffschmelze gegen dessen Wandungen verdrängt und dadurch das Formteil 10 mit dem Hohlraum 15 ausgeformt.

Aus den Fig. 10 und 11 der Zeichnung sind noch Spritzgieß-Formwerkzeuge 20 ersichtlich, bei denen das Gesamtvolumen des zur Bildung eines Formteils 10 benötigten Formnestes 23 immer bzw. von vornherein verfügbar ist.

Damit aber beim Einführen von fluidischem Druckmedium durch die Einspritzeinheiten 30 in die in das Formnest 23 eingefüllte thermoplastische Kunststoffschmelze 31 die Ausbildung eines einen Hohlraum 15 enthaltenden Formteils 10 möglich ist, sind hier besondere Zusatzvorkehrungen getroffen. Diese Zusatzvorkehrungen bestehen darin, daß sich an das eigentliche Formnest 23 mit einem Überlaufkanal 35, eine Nebenkammer 36 anschließt, in die der Überschuß an thermoplastischer Kunststoffschmelze verdrängt werden kann. Der Überlauf 35 ist dabei normalerweise zum Formnest 23 hin durch ein mechanisches Stellorgan, bspw. einen Schieber 37 abgesperrt. Sobald aber das fluidische Druckmedium über die Einspritzeinheiten 30 auf die Kunststoffschmelze-Füllung des eigentlichen Formnestes 23 zur Einwirkung gelangt, kann der Schieber 37 zum Öffnen des Überlaufes 35 freigegeben werden, damit dann die überschüssige Kunststoffschmelze 31 in die Nebenkammer 36 übertritt. Der Schieber 37 ist dabei gemäß Fig. 10 durch Fremdsteuerung, bspw. über einen Stellantrieb 38 betätigbar, während er nach Fig. 11 durch Drucksteuerung, bspw. entgegen der Wirkung einer Belastungsfeder 39 in Freigabestellung gedrückt werden kann.

Auch bei den Ausführungsbeispielen nach den Fig. 10 und 11 ist es wichtig, daß erst das fluidische Druckmedium innerhalb des Formnestes 23 auf die thermoplastische Kunststoffschmelze 31 zur Einwirkung gelangt, bevor für die thermoplastische Kunststoffschmelze der Überlauf 35 zur Nebenkammer 36 hin geöffnet wird.

Abschließend sei nur nochmals darauf hingewiesen, daß in allen vorstehend erläuterten Fällen die Möglichkeit gegeben ist, eine selbsttätige Drucksteuerung kombinatorisch auch mit einer Fremdsteuerung zusammenarbeiten zu lassen, bspw. in der Weise, daß entweder eine Volumensvergrößerung des Formnestes selbst oder aber ein Überlauf aus diesem heraus allein gegen die Wirkung eines Kraftspeichers massedruckabhängig und damit selbsttätig bewirkt wird, während die Rückführung auf das vorbegrenzte Formnest-Volumen bzw. die Absperrung des Überlaufs durch Fremdsteuerung - pneumatisch, hydraulisch, elektrisch - zumindest unterstützt werden kann.

Endlich soll noch auf eine vorteilhafte Nutzungsmöglichkeit der Spritzgieß-Formwerkzeuge 20 nach den Fig. 10 und 11 aufmerksam gemacht werden. Es ist nämlich denkbar, bei einem solchen Spritzgieß-Formwerkzeug 20 die dem eigentlichen Formnest 23 benachbarte Nebenkammer 36 selbst auch als ein zusätzliches Formnest zu nutzen. Hierin können dann nämlich aus der bei der Herstellung des Formteils 10 überschüssigen Kunststoffschmelze in der als Formnest wirkenden Nebenkammer 36 besonders solche Kunststoff-Formteile gebildet werden, an die für den praktischen Einsatz keine besonders hohen Qualitätsanforderungen gestellt werden.

### Liste der Bezugszeichen

- 1 Verfahrensschritt =: Vollspritzen des vorbegrenzten Formnestes mit Kunststoffschmelze
- 2 Verfahrensschritt =: Ruhe- bzw. Pausenzeit für die im Formnest befindliche Kunststoffschmelze und/oder Nachdruckausübung auf die im Formnest befindliche Kunststoffschmelze
- 3 Verfahrensschritt =: Fluidisches Medium auf Kunststoffschmelze im vorbegrenzten Formnest zur Einwirkung bringen
- 4 Verfahrensschritt =: Formnest auf Maximalvolumen vergrößern
- 5 Verfahrensschritt =: Druckkontrolle bzw. -regelung des mengenunabhängig verfügbaren fluidischen Druckmediums
- 6 Verfahrensschritt =: Abzug des fluidischen Druckmediums aus dem Hohlraum des Formteils
- 7 Verfahrensschritt =: Auswerfen des fertigen Formteils aus dem Formnest
- 10: Formteil
- 11: Bodenbereich
- 12: Mantelbereich
- 13: Wandung
- 14: Wandung
- 15: Hohlraum
- 16: Angußstück
- 20: Spritzgieß-Formwerkzeug
- 21: Formhälfte
- 22: Formhälfte
- 23: Formnest
- 24: Angußbuchse
- 25: Angußkanal
- 26: Spritzaggregat/Extruder
- 27: Kernschieber
- 28: Stellantrieb
- 29: vorgegebenes Maß
- 30: Einspritzeinheit
- 31: thermoplastische Kunststoffschmelze
- 32: Richtungspfeil
- 33: Belastungsfeder
- 34: Schrägfläche
- 35: Überlaufkanal
- 36: Nebenkammer
- 37: Schieber
- 38: Stellantrieb
- 39: Belastungsfeder

## Patentansprüche

1. Verfahren zum Spritzgießen von Formteilen (10) aus thermoplastischem Kunststoffmaterial, die mit ihren Wandungen (13, 14) einen Hohlraum (15) einschließen,
bei welchem ein in seinem Volumen begrenztes (27) Formnest (23) eines Formwerkzeuges (20; 21, 22) zunächst mit der Kunststoffschmelze (31) vollgespritzt und dann in seinem Volumen vergrößert (27, 28) sowie mit einem fluidischen Druckmedium (Gas) beaufschlagt wird (30), damit die Kunststoffschmelze (31) sich unter Hohlraumbildung (15) längs der Wandungen des vergrößerten Formnestvolumens (23) verteilt und an diese anlegt,
**dadurch gekennzeichnet,**
- daß erst nach Ablauf einer an den Kunststoffschmelze-Spritzvorgang anschließenden Pausen- oder Ruhezeit in die das vorbegrenzte (27) Formnestvolumen (23) vollständig ausfüllende Kunststoffschmelze (31) das fluidische Druckmedium (Gas) eingespritzt wird (30),
- und daß wiederum erst während bzw. mit der Einspritzung (30) und/oder Abhängigkeit von dieser Einspritzung (30) des fluidischen Druckmediums in die Kunststoffschmelze (31) das Volumen des Formnestes (23) gezielt vergrößert wird (28).

2. Verfahren nach Anspruch 1,
**dadurch gekennzeichnet**,
daß das fluidische Druckmedium (Gas) nach Ablauf einer an den Kunststoffschmelze-Spritzvorgang anschließenden Pausen- oder Ruhezeit in die das vorbegrenzte (27) Formnest-Volumen (23) vollständig ausfüllende Kunststoffschmelze (31) eingespritzt wird (30).

3. Verfahren nach Anspruch 2,
**dadurch gekennzeichnet**,
daß während der Pausen- oder Ruhezeit - die zwischen dem Ende des Einspritzens der Kunststoffschmelze und dem Beginn der Einspritzung des fluidischen Druckmediums liegt - auf das begrenzte Volumen des Formnestes (23) bzw. auf die darin befindliche Kunststoffschmelze (31) ein Nachdruck-Druck ausgeübt wird, und daß auch das fluidische Medium auf das begrenzte Volumen des Formnestes angesetzt wird.

4. Formwerkzeug zur Durchführung des Verfahrens nach einem der Ansprüche 1 bis 3,
bei dem das fluidische Druckmedium nach dem Einbringen der thermoplastischen Kunststoffschmelze in das Formnest einführbar ist, und bei dem das Formnest ein Teilvolumen hat, das nur zeitweilig zur Aufnahme von Kunststoffschmelze freigebbar ist,
**dadurch gekennzeichnet**,
daß das nur zeitweilig freigebbare (29) Teilvolumen durch eine Belastungsfeder (33) abgesperrt und/oder entgegen der Wirkung einer Belastungsfeder (39) freigebbar ist.

5. Formwerkzeug zur Durchführung des Verfahrens nach einem der Ansprüche 1 bis 4, bei dem das fluidische Druckmedium nach dem Einbringen der thermoplastischen Kunststoffschmelze in das Formnest einführbar ist, und bei dem das Formnest ein Teilvolumen hat, das nur zeitweilig zur Aufnahme von Kunststoffschmelze freigebbar ist,
**dadurch gekennzeichnet**,
daß das nur zeitweilig freigebbare (29) Teilvolumen im Formnest (23) selbst ausgebildet und in seinen Abmessungen von darin verlagerbaren Füllstücken (27) bestimmt ist (Figuren 2 bis 4).

6. Formwerkzeug nach Anspruch 5,
**dadurch gekennzeichnet**,
daß das nur zeitweilig freigebbare (29) Teilvolumen von einem in das Formnest (23) hineinragenden Kernschieber (27) bestimmt ist.

7. Formwerkzeug nach Anspruch 5,
**dadurch gekennzeichnet**,
daß das nur zeitweilig freigebbare (29) Teilvolumen in mindestens einem Raumabschnitt des Formnestes (23) liegt, der durch ein seinem Querschnitt angepaßtes, verlagerbares Füllstück freigebbar ist (Figuren 6 und 7 bzw. 8 und 9).

8. Formwerkzeug nach Anspruch 5,
**dadurch gekennzeichnet**,
daß das Teilvolumen (36) in einem Bereich neben dem eigentlichen Formnest (23) liegt und an dieses über einen wahlweisen absperrbaren und freigebbaren Überlauf (35) anschließt.

9. Formwerkzeug zur Durchführung des Verfahrens nach einem der Ansprüche 1 bis 3,
bei dem das fluidische Druckmedium nach dem Einbringen der thermoplastischen Kunststoffschmelze in das Formnest einführbar ist, und bei dem das Formnest ein Teilvolumen hat, das nur zeitweilig zur Aufnahme von Kunststoffschmelze freigebbar ist,
**dadurch gekennzeichnet,**
daß das nur zeitweilig freigebbare (29) Teilvolumen durch Fremdsteuerung (28 bzw. 38) und/oder durch Drucksteuerung und/oder durch Zeitsteuerung freigebbar ist.

10. Formwerkzeug nach einem der Ansprüche 4 bis 9,
**dadurch gekennzeichnet**,
daß die Füllstücke (27) für das Teilvolumen und/oder die Stellorgane (37) für den Überlauf (35) durch Fremdsteuerung (28 bzw. 38) und/oder durch Drucksteuerung (33 bzw. 39) und/oder durch Zeitsteuerung betätigbar sind.
